# EUROPÄISCHE PATENTANMELDUNG

(11) **EP 2 315 346 A1**
(43) Veröffentlichungstag der Anmeldung: **27.04.2011**
(21) Anmeldenummer: 09013323.2
(22) Anmeldetag: 21.10.2009
(51) Int. Cl.: H02M 7/46, H02M 7/72, H04L 25/02

(54) **Schaltungsanordnung zur galvanischen Trennung**

(71) Anmelder: SMA Solar Technology AG, 34266 Niestetal (DE)
(72) Erfinder: Wollenhaupt, Gerd, 34260 Kaufungen (DE); Sirkorski, Mateusz, 34329 Nieste (DE); Papenfuss, Frank, 34121 Kassel (DE)
(74) Vertreter: Walther, Walther & Hinz GbR

(57) **Zusammenfassung**

Eine Schaltungsanordnung zur galvanischen Trennung einer Datenübertragungsstrecke (1) eines Wechselrichters (2), wobei der Wechselrichter (2) einen Gleichspannungseingang (15) und einen Wechselspannungsausgang (16) aufweist, soll über eine hohe Trennspannung bzw. Isolationsnennspannung hinweg eine schnelle Datenübertragung für einen Wechselrichterbetrieb erlauben. Die Lösung soll eine sichere Trennung gewährleisten und dabei kostengünstig sein und wenig Platzbedarf haben. Außerdem sollen eine automatische Fertigung und eine geringe Leistungsaufnahme möglich sein. Dies wird dadurch erreicht, dass die Datenübertragung innerhalb des Wechselrichters (2) über eine Trennspannung von über 600 Volt hinweg erfolgt und dass zur galvanischen Trennung mindestens zwei integrierte elektronische Bausteine (8, 9, 10) mit integrierten Mikroübertragern mit strukturierten Kopplungsspulen seriell verschaltet sind.

## Beschreibung

Die Erfindung betrifft eine Schaltungsanordnung zur galvanischen Trennung einer Datenübertragungsstrecke eines Wechselrichters, wobei der Wechselrichter einen Gleichspannungseingang und einen Wechselspannungsausgang aufweist.

Für Kommunikationsstrecken, die eine schnelle Datenübertragung innerhalb eines Wechselrichters mit einer hohen Trennspannung von beispielsweise über 600 Volt ermöglichen sollen, können galvanisch trennende Bausteine eingesetzt werden.

Zur galvanischen Trennung sind schnelle Optokoppler bekannt, die die erforderlichen Eigenschaften haben. Nachteil dieser Bauelemente sind jedoch die hohen Kosten und dass sie nur für begrenzte Trennspannungen und -strecken verfügbar sind. Bei höheren Trennspannungen ist nur eine bedrahtete Technik möglich, die aber keine automatische Bestückung erlaubt. Ein anderer Nachteil ist die begrenzte Lebensdauer.

Auch bekannt ist, dass mehrere Standard-Optokoppler für geringere Trennspannungen, aber mit ausreichender Datenübertragungsrate hintereinander geschaltet sind, sodass Potenzialinseln zwischen den Optokopplern vorhanden sind. Jedoch erfordert diese teure Lösung einen zusätzlichen Schaltungsaufwand für die Spannungsversorgung der Potenzialinseln sowie einen hohen Leistungsbedarf für die Datenübertragung. Weiterhin ist die begrenzte Lebensdauer solcher Bauteile ungünstig.

Zur galvanischen Trennung sind zudem Lichtwellenleiterverbindungen mit einem Sender und Empfänger sowie einem zwischenliegenden Lichtwellenleiter bekannt. Mit dieser Technik sind beliebig hohe Trennspannungen und -strecken realisierbar. Diese Art der Entkopplung nimmt aber viel Platz in Anspruch und ist teuer. Auch ist ein hoher Montageaufwand erforderlich, denn die Konfektionierung des Lichtwellenleiters lässt keine automatische Bestückung zu. Darüber hinaus ist ein hoher Leistungsbedarf für die Datenübertragung nötig.

Bekannt sind auch lmpulsübertrager mit einer Ansteuer- und Auswerteelektronik. Für jedes Signal wird ein Übertrager und eine Ansteuersowie Auswerteelektronik benötigt, was zu einem hohen Schaltungsaufwand und Platzbedarf führt.

Möglich ist auch eine kapazitive Trennung mit einer Ansteuer- und Auswerteelektronik. Der Nachteil dieser Ansteuer- und Auswerteelektronik ist, dass diese deutlich aufwendiger als in der zuvor beschriebenen Technik ist. Unumgänglich sind Maßnahmen gegen Störanfälligkeit. Auf dem Markt sind solche Lösungen nur für begrenzte Trennspannungen und -strecken verfügbar.

Grundsätzlich eignet sich auch eine Funkübertragung. Zwar sind mit dieser Technik beliebig hohe Trennspannungen und -strecken realisierbar, doch auch hier wird eine Vorverarbeitung benötigt, wenn mehrere Signale über einen Datenkanal serialisiert übertragen werden. Diese Übertragung ist ebenfalls teuer und beinhaltet Zulassungsprobleme wegen des Funkprinzips.

Der Erfindung liegt die Aufgabe zugrunde, eine Schaltungsanordnung der eingangs genannten Art zu schaffen, die über eine hohe Trennspannung bzw. Isolationstrennspannung hinweg eine schnelle Datenübertragung für einen Wechselrichterbetrieb erlaubt. Die Lösung soll eine sichere Trennung gewährleisten und dabei kostengünstig sein und wenig Platzbedarf haben. Außerdem sollen eine automatische Fertigung und eine geringe Leistungsaufnahme möglich sein.

Diese Aufgabe wird dadurch gelöst, dass die Datenübertragung innerhalb des Wechselrichters über eine Trennspannung von mindestens 400 Volt oder sogar über 600 Volt hinweg erfolgt und dass zur galvanischen Trennung mindestens zwei integrierte elektronische Bausteine mit integrierten Mikroübertragern mit strukturierten Kopplungsspulen seriell verschaltet sind.

Der Vorteil der erfindungsgemäßen Lösung ist, dass am Markt solche Bausteine verfügbar sind, die eine schnelle Datenübertragung ohne Leistungsübertragung bis 90 Mbaud/s mit einer Trennspannung von 600 V und 8 mm Trennstrecke ermöglichen. Die Datenübertragung basiert auf einem im Baustein integrierten Mikroübertrager mit strukturierten Spulen. In dieser Technologie werden Bausteine mit und ohne Leistungsübertragung angeboten. Koppler mit einer Daten- und Leistungsübertragung mit 25 MBaud sind nur bis 400 V erhältlich.

Ohne Weiteres ist eine Trennspannung 1000 VDC möglich. Je zwei bidirektionale Signale (d.h. in Summe 4 Signale) können durch die Erfindung mit 115 kBaud/s und 500 kBaud/s übertragen werden, wobei die Signalverzögerung über die Übertragungsstrecke nicht mehr als 100 ns beträgt. Die Bestückung ist serientauglich, und es kann in Stückzahlen von 100.000 Stück pro Jahr automatisch gefertigt werden.

Zur Lösung der Aufgabe sind wenigstens zwei solcher Bausteine "in Reihe" geschaltet, von denen einer vorzugsweise eine Leistungsübertragung enthält. Die Potenzialinsel innerhalb derer die beiden Bausteine miteinander verbunden sind, wird von der Ausgangsspannung des Bausteins mit der Leistungsübertragung versorgt.

Der Vorteil der Erfindung sind insbesondere die niedrigen Kosten verglichen mit anderen Lösungen und eine sehr geringe Leistungsaufnahme. Auch ist keine zusätzliche Spannungsversorgung für die Potenzialinsel erforderlich. Günstig ist auch der geringe Platzbedarf dieser Lösung sowie die Möglichkeit einer automatischen Bestückung.

Die Schaltungsanordnung ermöglicht eine Kommunikation mit dem Wechselrichter, wobei die Anforderungen an Luft- und Kriechstrecken, die mindestens 10 mm betragen müssen, erfüllt werden. Mit der erfindungsgemäßen Anordnung lassen sich beliebig hohe Trennspannungen und Trennstrecken realisieren.

Kommunikationsdaten können Strom oder Spannung, sowohl AC als auch DC, Fehlerzustände oder ein Firmware Update sein.

Weitere vorteilhafte Ausgestaltungen der Erfindung sind in den Unteransprüchen gekennzeichnet.

In einer vorteilhaften Weiterbildung der erfindungsgemäßen Schaltungsanordnung ist vorgesehen, dass ein Potenzial einer zwischen den integrierten elektronischen Bausteinen vorhandenen Potenzialinsel symmetrisch ausgelegt ist. Zweckmäßigerweise wird dann das Potenzial der Potenzialinsel durch einen Spannungsteiler festgelegt. Insbesondere ist ein ohmscher Spannungsteiler zur Spannungsfestlegung angeschlossen. Aufgrund der begrenzten Spannungsfestigkeit, mit der die Bausteine zugelassen sind, wird zweckmäßigerweise mit Hilfe der zusätzlichen Symmetrierung sichergestellt, dass das Potenzial der Insel nicht beliebige Werte gegenüber den außen anliegenden Potenzialen annehmen kann. Daher wird diese Potenzialinsel mit Hilfe hochohmiger Widerstände festgelegt.

Damit sichergestellt wird, dass die maximale Spannung eines Bauelementes nicht überschritten wird, kann eine Überwachungseinrichtung zur Überwachung des Potenzials der Potenzialinsel vorhanden sein.

Ein Ausführungsbeispiel wird anhand der Zeichnungen näher erläutert, wobei weitere vorteilhafte Weiterbildungen der Erfindung und Vorteile derselben beschrieben sind.

Es zeigen:
- Fig. 1: eine Darstellung einer erfindungsgemäßen Schaltungsanordnung, und
- Fig. 2: eine Darstellung eines Photovoltaikwechselrichters mit einer Datenübertragungsstrecke.

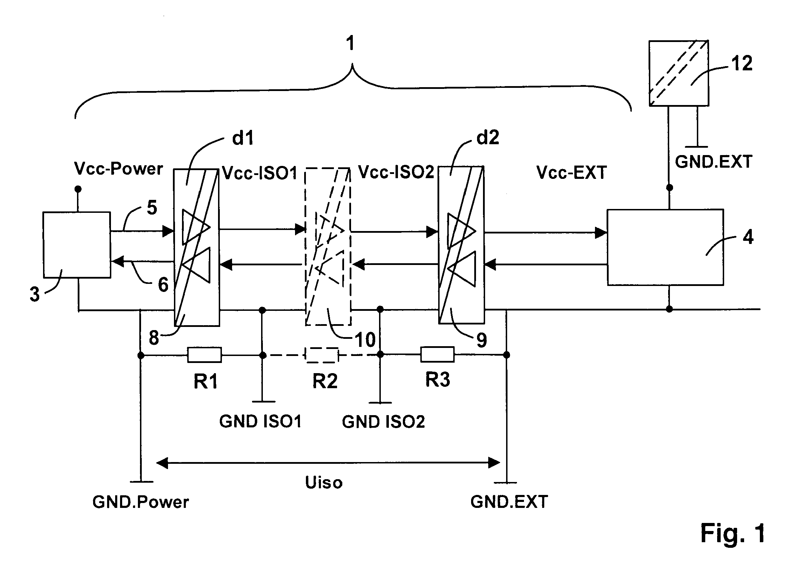

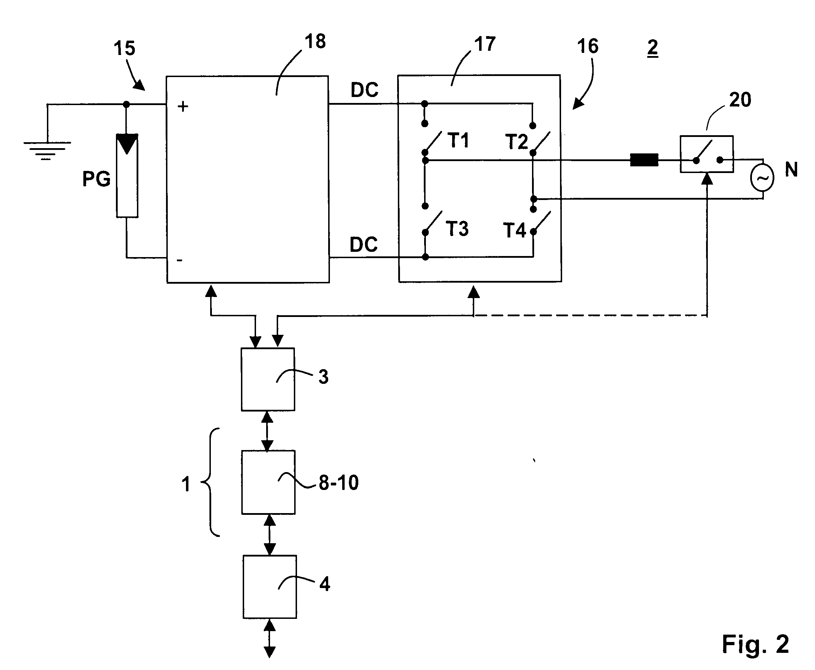

Fig. 1 veranschaulicht eine Datenübertragungsstrecke 1 für einen in Fig. 2 abgebildeten Photovoltaikwechselrichter 2. Zwischen einer Steuerungselektronik 3 und einer Kommunikationselektronik 4 sind zwei bidirektionale Datenkanäle 5 und 6 vorhanden. Die Datenübertragung erfolgt bidirektional mit n-Kanälen. Zwischen der Steuerungselektronik 3 und der Kommunikationselektronik 4 sind wenigstens zwei integrierte elektronische Bausteine 8 und 9 mit integrierten Mikroübertragern mit strukturierten Kopplungsspulen seriell verschaltet. Es kann mindestens ein weiterer derartiger integrierter elektronischer Baustein 10 zwischengeschaltet sein. Diese Bausteine 8 bis 10 bilden einen digitalen Isolator bzw. mehrere digitale Isolatoren z. B. d1, d2.

Die Datenübertragung erfolgt innerhalb des Wechselrichters 2 über eine Trennspannung von über 600 Volt, insbesondere 1000 V, hinweg. Die Steuerungselektronik 3 ist an eine erste Versorgungsspannung Vcc-power und an ein erstes Erdungspotenzial GND-power angeschlossen, während die Kommunikationselektronik 4 an eine zweite Versorgungsspannung Vcc-EXT und an ein zweites Erdungspotenzial GND-EXT angeschlossen ist. Die Trenn- bzw. Isolationsspannung Uiso liegt zwischen den beiden ErdungsPotenzialen GND-power und GND-EXT an, wie in Fig. 1 gekennzeichnet ist.

Die zweite Versorgungsspannung Vcc-EXT liefert ein Netzteil 12 für die Kommunikation. Diese Spannung kann eine AC- oder eine DC-Spannung sein. Das Netzteil 12 ist an dem zweiten ErdungsPotenzial GND-EXT geerdet.

Das Potenzial einer zwischen den integrierten elektronischen Bausteinen 8 bis 10 vorhandenen Potenzialinsel ist bauteilsymmetrisch ausgelegt. Obwohl hier von Symmetrierung gesprochen wird, muss zwischen den Potenzialinseln nicht die gleiche Spannungsdifferenz eingestellt werden. Ein Grund dafür sind die unterschiedlichen Isolationsnennspannungen von Kopplern mit und ohne Leistungsübertragung bzw. dass ohne Weiteres unterschiedliche Koppler eingesetzt werden können. Die Spannung der Potenzialinseln wird mit Hilfe von Widerständen eingestellt. Dazu wird das Potenzial der Potenzialinsel durch einen ohmschen Spannungsteiler mit den Widerständen R1, R2 und R3 festgelegt, wenn drei Bausteine 8, 9 und 10 eingesetzt werden. Bei nur zwei Bausteinen 8 und 9 werden nur die Widerstände R1 und R3 entsprechend eingesetzt. Der Widerstandswert eines der hochohmigen Widerstände R1 bis R3 liegt z. B. bei über 1 Megaohm. Bei zwei Bausteinen 8 und 10 werden nur zwei Widerstände R1 und R2 verwendet. Zwischen den Widerständen R1, R2 und R3 liegt das Potenzial GND-ISO1 und GND-ISO2 mit einer definierten Aufteilung an. Bei Uiso = 1000 V wäre dann das Potenzial GND-ISO1 und GND-ISO2 bei symmetrischer Aufteilung = 1000 V / 3. Allgemein gesagt ist das Potenzial GND-lSOn (n= Anzahl der Bausteine bzw. digitaler Isolatoren) = Uiso / n. Das GND-ISO1 und GND-ISO2 ist somit deutlich niedriger als eine höchst zulässige Trennspannung der Bausteine 8 bis 10 von z. B. 600 V bei 8 mm Trennstrecke, vorzugsweise aber mindestens 400 V bei 8 mm Trennstrecke.

Vorteilhaft ist es, wenn das Potenzial der Potenzialinsel GND-ISO1 bzw. GND-ISO2 durch eine Überwachungseinrichtung zur Überwachung des Potenzials der Potenzialinsel vorhanden ist.

Wie Fig. 1 zeigt, liegt eine kaskadenartige Spannungsversorgung der integrierten, elektronischen Bausteine 8 bis 10 vor. Werden nur die Bausteine 8 und 9 angeschlossen, dann versorgt der erste Baustein 8 den zweiten Baustein 9 mit Spannung. Die zwei induktiven Koppler-Bausteine 8 und 9 werden hintereinander geschaltet, sodass der erste Baustein 8 den zweiten Baustein 9 mit Spannung, z. B. 3,3 Volt, versorgt. Dieser Anschluss erfolgt also mit einer Leistungsübertragung. Alternativ kann der Anschluss dieser Bausteine 8 und 9 ohne eine Leistungsübertragung erfolgen.

Die Fig. 2 zeigt einen Photovoltaikwechselrichter 2, für den die beschriebene Datenverbindung eingesetzt wird. Die in Fig. 1 gezeigte Schaltungsanordnung dient zur galvanischen Trennung der Datenübertragungsstrecke des Wechselrichters 2. Der Wechselrichter 2 weist einen Gleichspannungseingang 15 und einen Wechselspannungsausgang 16 auf. An dem Gleichspannungseingang (+) und (-) ist ein Photovoltaikgenerator PG mit einer Leerlaufspannung von z. B. 600 V bis 1000 Volt. Der Ausgang 16 ist mit einem Netz N wie das öffentliche Energieversorgungsnetz verbunden, wobei die Spannung z. B. 220/230V bei 50/60 Hz ist. Andere Eingangs- und Ausgangsspannungen sind auch möglich.

Der Photovoltaikwechselrichter 2 umfasst eine Halb- oder Brückenschaltung 17 mit z. B. Schaltern T1 bis T4 bei einphasiger Schaltung oder z. B. sechs nicht gezeigte Schalter T1 bis T6 bei dreiphasiger Schaltung. Die Schalter sind Halbleiterschalter wie insbesondere MOSFETs, IBGTs oder andere Leistungsschalter.

Der Brückenschaltung 17 kann ein DC/DC-Wandler 18 und/oder eine andere Vorstufe vorgeschaltet sein. Zwischen dem Netz N und der Brückenschaltung 17 kann ein Filter mit einer Induktivität L, z.B. eine Drossel, angeschlossen sein. Es kann auch ein LC-Filter verwendet werden. Der Filter kann im Wechselrichter 2 integriert sein.

Zwischen dem Wechselrichter 2 und dem Netz kann auch ein Trennschalter 20 angeschlossen sein, um im Fehlerfall, bei einem Inselbetrieb oder dergleichen den Wechselrichter 2 vom Netz nehmen zu müssen.

Der Photovoltaikwechselrichter 2 kann mit einem Transformator oder transformatorlos ausgeführt sein. Außerdem kann er eine MPP-Regelung, eine PWM-Steuerung oder andere für Photovoltaikwechselrichter 2 geeignete Schaltungen umfassen. Der Pluspol des Generators PG ist geerdet. Diese Erdung ist in der Praxis herstellerbedingt abhängig.

Wie auch Fig. 2 zeigt, verläuft die bi-direktionale Datenübertragungsstrecke 1 zwischen der Steuerungselektronik 3 zur Regelung und Betriebsführung des Wechselrichters 2 und der Kommunikationselektronik 4 zur Anlagenüberwachung. Daten können Steuerdaten für die MPP-Regelung (Maximum-Power-Point) bzw. eine Arbeitspunktregelung des Wechselrichters, eine DC/DC-Wandler-Regelung sein oder Zustandsdaten der Anlage wie das Vorliegen eines Kurzschlusses oder Inselbetriebes. Besonders wichtig ist die schnelle Datenübertragung, weil gemessene Strom- und Spannungswerte schnell übertragbar sind, was für eine schnelle MPP-Regelung vorteilhaft ist. Eine schnelle Datenübertragung ist auch wichtig, wenn ein Erdschluss, ein Kurzschluss oder ein anderer Fehlerzustand vorliegt. Hier muss nämlich die Anlage schnell vom Netz N getrennt werden.

Die Kommunikationselektronik 4 kann eine Schnittstelle zwischen einem externen Steuerungs- und/oder Überwachungsmodul sein.

Auch kann die Schaltungsanordnung verwendet werden, wenn das Potenzial einer Messstelle vom Potenzial einer Auswertestelle deutlich abweicht. In der Praxis können einige 100 Volt Abweichung vorhanden sein, z. B., wenn ein Erdungsstrom am Pluspol eines Photovoltaikgenerators gemessen wird, eine Auswerteelektronik jedoch einen Potenzialbezug zum Minuspol des Generators besitzt. Die Datenübertragungsstrecke kann Daten zur Isolations- und/oder Erdschlussüberwachung übertragen.

Die Schaltungsanordnung kann eingesetzt werden zur Datenübertragung zwischen einer Photovoltaikanlage und einer räumlich entfernten Auswertestation.

Die Erfindung ist nicht auf dieses Beispiel beschränkt, so kann alternativ zum Photovoltaikwechselrichter 2 auch eine andere elektronische Einrichtung anstelle des Wechselrichters verwendet werden. Eine galvanische Trennung ist nicht nur bei Solarwechselrichtern, bei der unterschiedliche Potenzialebenen vorliegen, denkbar.

### BEZUGSZEICHENLISTE

- 1: Datenübertragungsstrecke
- 2: Wechselrichter
- 3: Steuerungselektronik
- 4: Kommunikationselektronik
- 5, 6: bidirektionale Datenkanäle
- 7: -
- 8, 9, 10: elektronische Bausteine
- 11: -
- 12: Netzteil
- 13: -
- 14: -
- 15: Gleichspannungseingang
- 16: Wechselspannungsausgang
- 17: Brückenschaltung
- 18: DC/DC-Wandler
- 19: -
- 20: Trennschalter

- N: Netz
- T1-T4: Schalter
- G: Generator
- d1, d2: digitale Isolatoren

## Patentansprüche

1. Schaltungsanordnung zur galvanischen Trennung einer Datenübertragungsstrecke (1) eines Wechselrichters (2), wobei der Wechselrichter (2) einen Gleichspannungseingang (15) und einen Wechselspannungsausgang (16) aufweist,
**dadurch gekennzeichnet,**
**dass** die Datenübertragung innerhalb des Wechselrichters (2) über eine Trennspannung von mindestens 400 Volt hinweg erfolgt und
**dass** zur galvanischen Trennung mindestens zwei integrierte elektronische Bausteine (8, 9, 10) mit integrierten Mikroübertragern mit strukturierten Kopplungsspulen seriell verschaltet sind.

2. Schaltungsanordnung nach Anspruch 1,
**dadurch gekennzeichnet,**
**dass** ein Potenzial einer zwischen den integrierten elektronischen Bausteinen (8, 9, 10) vorhandenen Potenzialinsel symmetrisch ausgelegt ist.

3. Schaltungsanordnung nach Anspruch 1 oder 2,
**dadurch gekennzeichnet,**
**dass** das Potenzial der Potenzialinsel durch einen Spannungsteiler festgelegt wird.

4. Schaltungsanordnung nach Anspruch 3,
**dadurch gekennzeichnet,**
**dass** ein ohmscher Spannungsteiler zur Spannungsfestlegung angeschlossen ist.

5. Schaltungsanordnung nach einem der vorhergehenden Ansprüche,
**dadurch gekennzeichnet,**
**dass** eine Überwachungseinrichtung zur Überwachung des Potenzials der Potenzialinsel vorhanden ist.

6. Schaltungsanordnung nach einem der vorhergehenden Ansprüche,
**dadurch gekennzeichnet,**
**dass** die Trennspannung 1000 Volt beträgt.

7. Schaltungsanordnung nach einem der vorhergehenden Ansprüche,
**dadurch gekennzeichnet,**
**dass** die Datengeschwindigkeit der Datenübertragungsstrecke (1) 115 kBaud/s bis 500 kBaud/s beträgt.

8. Schaltungsanordnung nach einem der vorhergehenden Ansprüche,
**gekennzeichnet durch**
eine Dimensionierung der Schaltungsanordnung, sodass eine Signalverzögerung der Übertragungsstrecke (1) nicht mehr als 100ns beträgt.

9. Schaltungsanordnung nach einem der vorhergehenden Ansprüche,
**dadurch gekennzeichnet,**
**dass** der Wechselrichter (2) ein Photovoltaik-Wechselrichter ist.

10. Schaltungsanordnung nach Anspruch 9,
**dadurch gekennzeichnet,**
**dass** an dem Wechselrichter (2) ein am Pluspol geerdeter Photovoltaikgenerator (PG) angeschlossen ist.

11. Schaltungsanordnung nach einem der vorhergehenden Ansprüche,
**dadurch gekennzeichnet,**
**dass** die Datenübertragungsstrecke (1) zwischen einer Steuerungselektronik (3) zur Regelung und Betriebsführung des Wechselrichters (2) und einer Kommunikationselektronik (4) zur Anlagenüberwachung vorhanden ist, wobei die Datenübertragungsstrecke (1) bi-direktional mit n Kanälen ausgeführt ist.

12. Schaltungsanordnung nach einem der vorhergehenden Ansprüche,
**dadurch gekennzeichnet,**
**dass** nur zwei integrierte elektronische Bausteine (8, 9) mit strukturierten Kopplungsspulen seriell verschaltet sind.

13. Schaltungsanordnung nach einem der vorhergehenden Ansprüche,
**dadurch gekennzeichnet,**
**dass** eine kaskadenartige Spannungsversorgung der integrierten elektronischen Bausteine (8, 9, 10) erfolgt.

14. Schaltungsanordnung nach einem der Ansprüche 12 und 13,
**dadurch gekennzeichnet,**
**dass** der erste Baustein (8) den zweiten Baustein (9) mit Spannung versorgt.

15. Schaltungsanordnung nach einem der Ansprüche 12 und 13,
**dadurch gekennzeichnet,**
**dass** jeder integrierte elektronische Baustein (8, 9, 10) eine Luft- und Kriechstrecke von 8 mm hat.
